Europäisches Patentamt

European Patent Office

Office européen des brevets

(19)

(11) Veröffentlichungsnummer: **0 070 031**
**A2**

## (12) EUROPÄISCHE PATENTANMELDUNG

(21) Anmeldenummer: 82106266.8

(22) Anmeldetag: 13.07.82

(51) Int. Cl.³: **G 11 B 7/24**
**G 11 B 7/26**
**//G11B23/40**

(30) Priorität: 15.07.81 DE 3127993

(43) Veröffentlichungstag der Anmeldung:
19.01.83 Patentblatt 83/3

(84) Benannte Vertragsstaaten:
AT BE CH DE FR GB IT LI LU NL SE

(71) Anmelder: POLYGRAM GmbH
Harvestehuder Weg 1-4
D-2000 Hamburg 13(DE)

(72) Erfinder: Reinmüller, Heinrich, Ing.grad.
Grünewaldstrasse 19
D-3000 Hannover 1(DE)

(74) Vertreter: Mehl, Ernst, Dipl.-Ing.
Postfach 22 01 76
D-8000 München 22(DE)

(54) Plattenförmiger optisch auslesbarer Informationsträger hoher Speicherdichte 111111).

(57) Der die Erfindung betreffende Informationsträger besteht aus einer ein Mittelloch (M) aufweisenden transparenten Trägerplatte (1) mit einer die Information tragenden Seite, die hierbei die Information in Form einer mit einer reflektierenden Schicht überzogenen, in einer konzentrischen Ringfläche angeordneten Mikrostruktur aufweist und mit einer äußeren Schutzschicht (2, 4) abgedeckt ist. Es wird vorgeschlagen, die äußere Schutzschicht durch einen Aufdruck von Grundfarbe ausreichender Stärke zu realisieren, die wieder- um ein- oder mehrfarbig darauf aufgebrachte Schrift und Bildinformationen (3) trägt.

FIG 3

EP 0 070 031 A2

Polygram GmbH
Harvestehuder Weg 1-4
8000 Hamburg 13

Unser Zeichen
VPA   81 P 9 5 0 2 . F

Plattenförmiger optisch auslesbarer Informationsträger
hoher Speicherdichte

Die Erfindung bezieht sich auf einen plattenförmigen, optisch auslesbaren Informationsträger hoher Speicherdichte, bestehend aus einer ein Mittelloch aufweisenden transparenten Trägerplatte mit einer die Information tragenden Seite, die hierbei die Information in Form einer mit einem reflektierenden Film überzogenen, in einer konzentrischen Ringfläche angeordneten Mikrostruktur aufweist und mit einer äußeren Schutzschicht abgedeckt ist.

Informationsträger dieser Art sind beispielsweise durch die DE-AS 23 41 338 bekannt. Die auf einer Seite der transparenten Trägerplatte vorhandene Informationsstruktur wird bei der Wiedergabe mittels eines fokussierten Laserstrahls durch die Platte hindurch ausgelesen, wodurch die optische Struktur gewissermaßen für Staub und Beschädigungen unempfindlich gemacht ist. Die Schutzschicht auf der die Information tragenden Seite der Trägerplatte kann eine mit Haftmittel versehene Papierschicht oder Kunststoffolie sein. Auch ist es möglich, die Schicht durch eine z.B. aufgespritzte Lackschicht zu realisieren, deren Dicke die Tiefe der Informationsstruktur übersteigt.

Wie die Praxis zeigt, sind mit Haftmittel versehene Papierschichten oder Kunststoffolien als Schutzschichten im allgemeinen nicht geeignet, weil eine faser-

Jae 1 Mai / 14.07.81

richtungsorientierte Papierschicht, aber auch der im allgemeinen hinsichtlich des Trägerplattenmaterials unterschiedliche Wärmeausdehnungskoeffizient der Kunststoffolie ein Verziehen der Platte begünstigt. Solche Verzugserscheinungen sind außerordentlich kritisch, da die bei solchen Platten zu fordernden zulässigen Toleranzgrenzen für die Ebenheit der Platten mit Rücksicht auf das optische Lesesystem sehr eng sind. Aus den gleichen Gründen muß verlangt werden daß eine durch eine z.B. aufgespritzte Lackschicht realisierte Schutzschicht über die Fläche hinweg praktisch keine Dickenschwankungen aufweist.

Hinzu kommt daß die Verzugsgefahr weiter durch aufzubringende Etiketten erhöht wird. Unabhängig von der Schutzschicht selbst wirkt sich der Einfluß von Papier oder Kunststoffolienetiketten auf die Verzugsneigung einer solchen Platte umso mehr aus, je kleiner das Verhältnis des Plattendurchmessers zum Etikettdurchmesser ist. Besonders kritische Verhältnisse ergeben sich deshalb bei der in die Literatur unter der Bezeichnung Compact Disc eingegangenen Digitalschallplatte, die lediglich einen Plattendurchmesser von etwa 12 cm aufweist und bei der das auf die Schutzschicht aufzubringende Etikett im Hinblick auf die im allgemeinen umfangreichen Informationsangaben in seinem Durchmesser nicht beliebig klein gewählt werden kann.

Der Erfindung liegt die Aufgabe zugrunde, insbesondere für eine Compact Disc für die Schutzschicht in Verbindung mit dem Etikett eine Lösung anzugeben, die die hierbei auftretenden geschilderten Schwierigkeiten überwindet.

Diese Aufgabe wird für einen plattenförmigen, optisch auslesbaren Informationsträger hoher Speicherdichte der einleitend beschriebenen Art gemäß der Erfindung durch die im Kennzeichen des Patentanspruchs 1 angegebenen Maßnahmen gelöst.

Der Erfindung liegt die Erkenntnis zugrunde, daß sich die erforderliche Schutzschicht in außerordentlich einfacher Weise durch Aufbringen einer Grundfarbe ausreichender Stärke verwirklichen läßt, die zugleich den Grunddruck für das aufzubringende Etikett darstellt. Das Aufbringen der Grundfarbe mittels Druck ermöglicht darüber hinaus einen sehr gleichmäßigen Aufbau der Druckfarbschicht über die Fläche der Trägerplatte hinweg. Gleichzeitig wird dadurch in außerordentlich vorteilhafter Weise ein sich über die gesamte Fläche einer Seite des Informationsträgers erstreckendes Etikett verwirklicht, das im Gegensatz zu Papier- oder Kunststoffolienetiketten keine Verzugskräfte auf die Platte ausübt.

Um ein schnelles Trocknen der aufzudruckenden Grundfarbe in ausreichender Stärke zu fördern, ist es mitunter sinnvoll, den Grundfarbenaufdruck aus zwei und mehr Schichten aufzubauen, und zwar in der Weise; daß eine aufgebrachte Grundfarbschicht in einem Zwischenschritt getrocknet wird, bevor die nächste Grundfarbschicht aufgedruckt wird.

Auch kann es sinnvoll sein, zur besseren Haftung der Grundfarbe auf der die Information tragenden Seite der Trägerplatte zunächst eine Grundierung in Form einer Unterschicht aufzubringen, die zweckmäßigerweise ebenfalls aufgedruckt, jedoch gegebenenfalls auch durch Schleuder- oder Spritzvorgang aufgebracht werden kann.

Für das Aufdrucken der Grundfarbe, wie auch der auf die Grundfarbe aufzudruckenden Bild- und Schriftinformation, eignet sich in besonderer Weise das in der DE-PS 23 04 723, Spalte 2, Zeilen 26 bis 72 angegebene Tampon-Druckverfahren, das seinerseits mit der in dieser Patentschrift angegebenen Druckvorrichtung zu optimalen Arbeitsergebnissen führt.

Weitere vorteilhafte Ausgestaltungen der Erfindung sind in den Ansprüchen 4 bis 7 angegeben.

Anhand von in der Zeichnung dargestellten Ausführungsbeispielen soll die Erfindung im folgenden noch näher beschrieben werden. In der Zeichnung bedeuten

Fig. 1 die Aufsicht auf einen Informationsträger mit einer ersten Flächenform der Etikettschutzschicht,

Fig. 2 und 3 Schnittdarstellungen des Informationsträgers nach Fig. 1 mit unterschiedlichem Grundfarbschichtaufbau,

Fig. 4 die Aufsicht auf einen Informationsträger mit einer zweiten Flächenform der Etikettschutzschicht,

Fig. 5 und 6 Schnittdarstellungen des Informationsträgers nach Fig. 4 mit verschiedenem Grundfarbschichtaufbau,

Fig. 7 eine Aufsicht auf einen Informationsträger mit einer dritten Flächenform der Etikettschutzschicht,

Fig. 8 und 9 Schnittdarstellungen des Informationsträgers nach Fig. 7 mit verschiedenem Grundfarbschichtaufbau,

Fig.10 die Aufsicht auf einen Informationsträger mit einer vierten Flächenform der Etikettschutzschicht,

Fig. 11 und 12 Schnittdarstellungen des Informationsträgers nach Fig. 10 mit verschiedenem Grundfarbschichtaufbau.

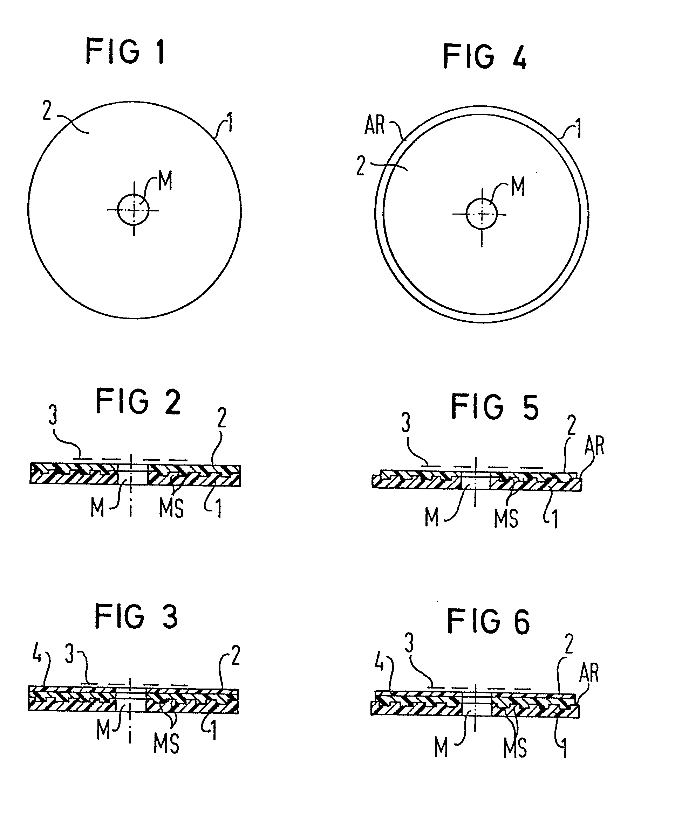

Die Informationsträgerplatte 1 in Fig. 1 zeigt in der
Aufsicht eine Etikettschutzschicht, die lediglich vom
Mittelloch M und dem Plattenrand begrenzt ist. Wie
weiterhin die Schnittdarstellung in Fig. 2 zeigt, ist
sie auf der Informationsseite der Trägerplatte 1 in
einer einzigen Grundfarbschicht 2 aufgebracht. Der
auf die Grundfarbschicht 2 aufgebrachte Informationsdruck 3 ist wie auch in allen übrigen Schnittdarstellungen der Figuren 5, 6, 8, 9, 11 und 12 in einer
über der Grundfarbschicht 2 verlaufenden unterbrochenen Linie angedeutet.

Die in der Schnittdarstellung der Fig. 3 gezeigte
Variante weist neben der Grundfarbschicht 2 eine Unterschicht 4 auf, die entweder wie die Grundfarbschicht
2 ebenfalls aus der gleichen Grundfarbe bestehen kann,
oder aber eine der besseren Haftung der Grundfarbschicht 2 auf der Informationsseite der Trägerplatte 1
dienende Grundierung ist.

Die in Fig. 4 dargestellte Informationsträgerplatte 1
weist eine zweite Flächenform der Etikettschutzschicht
auf, die hierbei vom Mittelloch M und einer schmalen
informationsfreien äußeren Ringzone AR begrenzt ist.
Die Schnittdarstellungen der Fig. 5 und 6 entsprechen
hierbei den Schnittdarstellungen der Fig. 2 und 3.
Die äußere Ringzone AR kann gegebenenfalls aus drucktechnischen Gründe erforderlich sein.

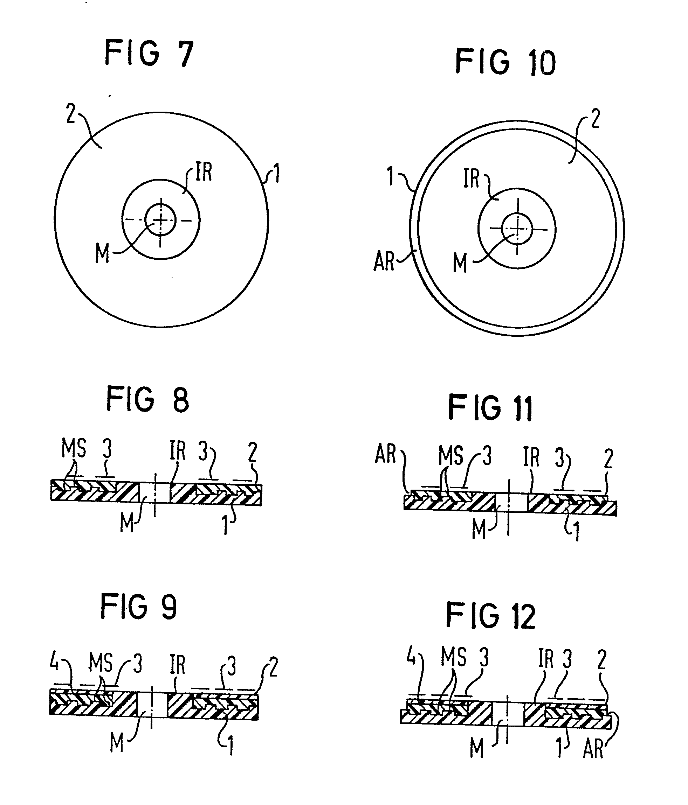

Die Informationsträgerplatte 1 nach Fig. 7 weist eine
dritte Flächenform der Etikettschutzschicht auf, die einerseits vom Plattenaußenrand und andererseits vom äußeren Rand einer informationsfreien konzentrischen inneren Ringzone IR begrenzt ist. Auch diese Flächenform kann sich im Hinblick auf drucktechnische Erfordernisse als sinnvoll erweisen. Die Schnittdarstellungen der Informationsträgerplatte 1 nach Fig. 7 in den Figuren 8 und 9 entsprechen wiederum den Schnittdarstellungen der Figuren 2/5 und 3/6.

Die Aufsicht auf die Informationsträgerplatte 1 nach Fig. 10 zeigt schließlich eine vierte Flächenform der Etikettschutzschicht, die sowohl von einer schmalen informationsfreien äußeren Ringzone AR als auch von einer inneren informationsfreien Ringzone IR begrenzt ist. Die Schnittdarstellungen der Informationsträgerplatte 1 nach Fig. 10 in den Figuren 11 und 12 entsprechen wiederum den Schnittdarstellungen der Figuren 2/5/8 und 3/6/9.

7 Patentansprüche
12 Figuren

Patentansprüche

1. Plattenförmiger, optisch auslesbarer Informationsträger hoher Speicherdichte, bestehend aus einer ein
Mittelloch aufweisenden transparenten Trägerplatte mit
einer die Information tragenden Seite, die hierbei
die Information in Form einer mit einem reflektierenden Film überzogenen, in einer konzentrischen Ringfläche angeordneten Mikrostruktur aufweist und mit
einer äußeren Schutzschicht abgedeckt ist, d a -
d u r c h   g e k e n n z e i c h n e t , daß die
äußere Schutzschicht ein Aufdruck von Grundfarbe ausreichender Stärke ist, die wiederum ein- oder mehrfarbig darauf aufgebrachte Schrift- und Bildinformationen trägt.

2. Informationsträger nach Anspruch 1, d a d u r c h
g e k e n n z e i c h n e t , daß der Grundfarbenaufdruck aus zwei und mehr Schichten (2, 4) aufgebaut
ist.

3. Informationsträger nach Anspruch 1 oder 2, d a -
d u r c h   g e k e n n z e i c h n e t , daß auf
die die Information tragende Seite der Trägerplatte
(1) eine Grundierung in Form einer Unterschicht (4)
für den Grundfarbenaufdruck aufgebracht ist.

4. Informationsträger nach einem der vorhergehenden
Ansprüche, d a d u r c h   g e k e n n z e i c h -
n e t , daß eine vom Plattenrand begrenzte schmale
informationsfreie äußere Ringzone (AR) grundfarbenaufdruckfrei ist.

5. Informationsträger nach einem der vorhergehenden Ansprüche, d a d ü r c h  g e k e n n z e i c h - n e t , daß eine vom Mittelloch (M) begrenzte informationsfreie konzentrische innere Ringzone (IR) grundfarbenaufdruckfrei ist.

6. Informationsträger nach einem der Ansprüche 1 bis 3, d a d u r c h  g e k e n n z e i c h n e t , daß sich der Grundfarbenaufdruck über die gesamte, die Information tragende Seite der Trägerplatte (1) erstreckt.

7. Informationsträger nach einem der vorhergehenden Ansprüche, g e k e n n z e i c h n e t  d u r c h seine Verwendung als Digitalschallplatte mit einem Durchmesser von ca. 12 cm und einem eine Plattenseite ausfüllenden aufgedruckten Etikett.

## FIG 1

2     1

M

## FIG 4

AR     1

2

M

## FIG 2

3     2

M   MS   1

## FIG 5

3     2   AR

M   MS   1

## FIG 3

4   3   2

M   MS   1

## FIG 6

4   3   2   AR

M   MS   1

## FIG 7

## FIG 10

## FIG 8

## FIG 11

## FIG 9

## FIG 12